**Europäisches Patentamt**

(19) **European Patent Office**

**Office européen des brevets**

(11) Veröffentlichungsnummer: **0 004 977**
**B1**

(12) # EUROPÄISCHE PATENTSCHRIFT

(45) Veröffentlichungstag der Patentschrift:
**30.12.81**

(21) Anmeldenummer: **79101211.5**

(22) Anmeldetag: **23.04.79**

(51) Int. Cl.³: **G 03 B 41/18**

(54) Einrichtung an einer Planfilmkassette, insbesondere einer Röntgenfilmkassette.

(30) Priorität: **26.04.78 DE 2818338**

(43) Veröffentlichungstag der Anmeldung:
**31.10.79 Patentblatt 79/22**

(45) Bekanntmachung des Hinweises auf die Patenterteilung:
**30.12.81 Patentblatt 81/52**

(84) Benannte Vertragsstaaten:
**BE FR GB IT NL SE**

(56) Entgegenhaltungen:
**DE-C- 328 672**
**US-A-2 878 389**

(73) Patentinhaber: **AGFA-GEVAERT Aktiengesellschaft Camera-Werk, Postfach, D-8000 München 90 (DE)**

(72) Erfinder: **Bauer, Walter, Heinrich-Wieland-Strasse 178, D-8000 München 83 (DE)**
Erfinder: **Kröbel, Heinz, Ahornring 49, D-8021 Taufkirchen (DE)**
Erfinder: **Färber, Heinrich, Dietlindenstrasse 9, D-8000 München 90 (DE)**

## Einrichtung an einer Planfilmkassette, insbesondere einer Röntgenfilmkassette

Die Erfindung betrifft eine Einrichtung an einer Planfilmkassette, insbesondere einer Röntgenfilmkassette, zum Öffnen und Schliessen der einen Bodenteil und einen Deckel aufweisenden Kassette, mit zwei an einer Seite angeordneten, gegenläufig zu betätigenden, mittels Federn in Verschlussstellung gehaltenen Schiebern mit Haken, welche an dem Deckel angebrachte Zapfen in Verschlussstellung hintergreifen.

Bei Planfilmkassetten ist im allgemeinen der Kassettendeckel über ein Scharnier an einem Rand mit dem Bodenteil verbunden, wobei sich dann die Verschlusselemente auf der dem Scharnier gegenüberliegenden Seite befinden. Es sind aber auch Kassetten bekannt, bei denen der Deckel im wesentlichen in einer parallelen Ausrichtung auf den Bodenteil gebracht wird und durch Verschlusselemente an mindestens zwei sich gegenüberliegenden Seiten befestigt wird. Bei grösseren Kassetten des zuerst genannten Typs können entlang der Verschliessseite auch mehrere Verschlusselemente vorgesehen werden.

Eine Einrichtung der eingangs genannten Art ist beispielsweise aus der US-A-2 878 389 bekannt. Der Nachteil bei dieser bekannten Kassette, insbesondere bei einer grossformatigen Kassette, ist darin zu sehen, dass bei Stosseinwirkungen in bestimmten Richtungen zumindest ein Schieber gegen die Federkraft verschoben werden kann und den Zapfen am Deckel freigibt. Dies führt aufgrund der Vorspannungen im Deckel dazu, dass dieser so weit aufspringen kann, dass ein Lichteinfall auf den Film erfolgt.

Aufgabe der Erfindung ist es daher, eine Einrichtung an einer Planfilmkassette der eingangs genannten Art derart weiterzubilden, dass ein selbsttätiges Öffnen der Kassette oder nur eines Verschlusselementes der Kassette aufgrund von Stosseinwirkungen vermieden ist.

Diese Aufgabe wird durch die im Kennzeichen des Anspruchs 1 aufgeführten Mittel gelöst.

In der DE-C-328 672 ist zwar ein Verschlussmechanismus mit einem scheibenförmigen, mehrarmigen Hebel bekannt, welcher jedoch ausschliesslich mittels einer Handhabe und nicht mittels eines der mit ihm verbundenen Verriegelungselemente zu betätigen ist.

Mit der Erfindung wird dagegen erreicht, dass beispielsweise beim Fallenlassen der Kassette auf den Fussboden ein Öffnen der Kassette dadurch vermieden wird, dass die Kraft der beiden im wesentlichen gleich schweren Schieber aufgrund des Stosses durch die mechanische Verbindung aufgehoben wird. Bei einem Schieber von etwa 8 g müsste die Gegenkraft der Feder etwa 80 N betragen, wenn angenommen wird, dass die Kassette aus 1 m Höhe gefallen ist, der Dämpfungsweg etwa 1 mm betragen darf und die Reibung des Schiebers vernachlässigt wird. Federn dieser Grösse sind aber in Röntgenfilmkassetten unannehmbar.

Ein Weg zur Ausführung der Erfindung wird im folgenden anhand von Figuren eingehend erläutert. Es zeigen:

Fig. 1 eine perspektivische Ansicht eines Teils einer Röntgenfilmkassette, bei der durch einen Ausbruch die Verschlusseinrichtung dargestellt ist;

Fig. 2 eine Seitenansicht einer Verschlussausführung gemäss der Erfindung; und

Fig. 3 eine Einzelheit E aus Fig. 2.

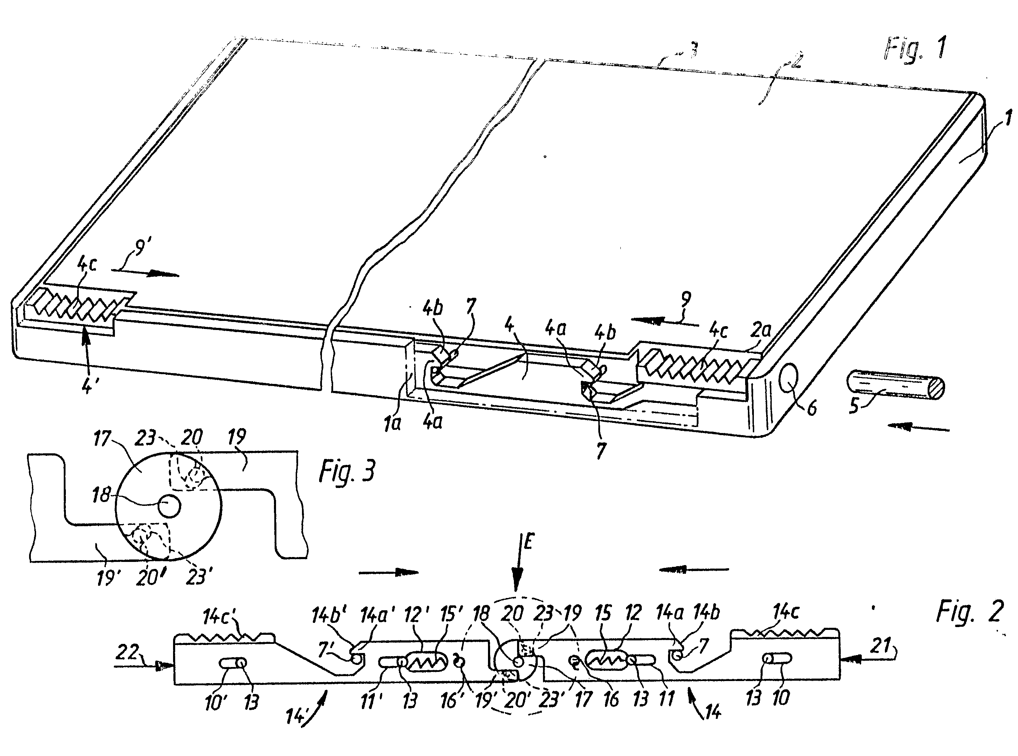

In Fig. 1 ist mit 1 ein Bodenteil einer Röntgenfilmkassette bezeichnet, an dem über ein nicht dargestelltes Scharnier ein Deckel 2 entlang dem Rand 3 angelenkt ist. An dem der Scharnierseite gegenüberliegenden Rand des Bodenteils 1 ist ein Schieber 4 vorgesehen, der im wesentlichen an einer Seitenwand 1a des Bodenteils 1 anliegt und in einer Vertiefung in der Grundfläche des Bodenteils 1 geführt ist. Der Schieber 4 weist zwei Haken 4a auf, deren Rückseite mit einer Schrägfläche 4b versehen ist. Ausserdem ist an dem Schieber 4 ein Betätigungselement bzw. Griffstück 4c ausgeformt, das bei geschlossenem Deckel 2 durch eine Aussparung 2a in diesem Deckel von aussen zugänglich ist. Das Griffstück 4c befindet sich im wesentlichen in einer Ecke der Röntgenfilmkassette und kann, ausser von Hand, auch durch einen Stift 5 betätigt werden, der durch eine Bohrung 6 in der Seitenwand des Bodenteils 1 auf die Seitenfläche des Griffstückes 4c auftreffen kann. Der Stift 5 ist vorzugsweise Teil eines automatischen Be- und Entladegerätes, in welchem also bei Tageslicht ein Film in die Kassette eingegeben bzw. dieser entnommen werden kann.

Etwa an der Stelle der Haken 4a sind seitlich nach aussen gerichtete Zapfen 7 an der Seitenwand des Deckels 2 angebracht, wobei in Ruhestellung des Schiebers 4 und in Verschlussstellung des Deckels 2 die Haken 4a die Zapfen 7 des Deckels 2 umgreifen.

Der Schieber 4 ist in Richtung des Pfeiles 9 verschiebbar und wird von einer Zugfeder, wie sie anhand der Figur 2 noch beschrieben wird, in der dargestellten Ruhestellung gehalten. Zudem ist auf der gleichen Seite ein zweiter Schieber 4' vorgesehen, der gegenläufig zum ersten Schieber 4 betätigt werden kann.

Zum Öffnen der Kassette brauchen lediglich die Griffstücke 4c zur Kassettenmitte in Pfeilrichtung 9 bzw. 9' verschoben werden, so dass die Haken 4a die Zapfen 7 freigeben und der Kassettendeckel aufgrund der Spannung durch seine Vorwölbung aufspringt. Ebenso könnte der Schieber 4 durch das Eingreifen des Stiftes 5 in die gewünschte Richtung verschoben werden. Beim Schliessen der Kassette wird der Deckel 2 zugedrückt, wobei die Zapfen 7 auf die Schrägflächen 4b des Schiebers 4 drücken und damit den Schieber ebenfalls in Pfeilrichtung 9 aus seiner Ruhestellung bewegen, bis die Haken 4a hinter die Zapfen zurückspringen.

Das Wesen der Erfindung soll nun anhand der Figur 2 verdeutlicht werden, wobei die beiden darin wiedergegebenen Schieber 14 und 14' aus Gründen der Übersichtlichkeit nur jeweils einen Haken 14a bzw. 14a' aufweisen. Die Haken 14a bzw. 14a' umgreifen die am Deckel 2 angebrachten Zapfen 7 bzw. 7'. In den Schiebern 14 und 14' sind jeweils zwei parallel zur Bewegungsrichtung des Schiebers verlaufende Schlitze 10 und 11 bzw. 10' und 11' ausgeformt. In diesen Schlitzen laufen von der Seitenwand 1a des Bodenteils ausgehende Stifte 13 zur Führung der Schieber 14 und 14'. Die Schlitze 11 bzw. 11' weisen eine zur Mitte hin gerichtete Erweiterung 12 bzw.12' auf, in der eine Zugfeder 15 bzw. 15' untergebracht ist. Die Zugfeder 15 bzw. 15' ist mit einem Ende an einem der Stifte 13 und mit ihrem anderen Ende in einer in den Schiebern 14 bzw. 14' ausgeformten Bohrung 16 bzw. 16' eingehängt.

An den sich gegenüber liegenden Enden der Schieber 14 und 14' ist jeweils ein Vorsprung 19 bzw. 19' ausgeformt, wobei der eine Vorsprung 19 an dem einen Ende eines Hebelelementes 17 über den Drehpunkt 20 und der andere Vorsprung 19' an dem anderen Ende des Hebelelementes 17 über den Drehpunkt 20' angelenkt sein kann. Das Hebelelement 17 ist in seiner Mitte um eine an der Seitenwand 1a angebrachte Achse 18 drehbar gelagert.

Zu einer einfachen Herstellung der Elemente 17 bis 20 ist es gemäss Figur 2 und Figur 3 zweckmässig, das Hebelelement 17 als kleines Rädchen auszubilden, in welchem an den Anlenkstellen jeweils ein radialer Schlitz 23 bzw. 23' vorgesehen ist. An den Vorsprüngen 19 bzw. 19' ist je ein kleiner Stift 20 bzw. 20' angebracht, der parallel zur Achse 18 verläuft und in den jeweiligen Schlitz 23 bzw. 23' des Rädchens 17 passt.

Die Wirkungsweise der Einrichtung zum Öffnen und Schliessen einer Kassette ist nun folgendermassen:

Die in Figur 2 dargestellte Stellung der Schieber 14 und 14' gibt die Verschlussstellung der Kassette wieder, wobei die Zapfen 7 und 7' des Deckels 2 sich unter den Haken 14a und 14a' befinden. Zum Öffnen wird nun das Griffstück 14c in Pfeilrichtung 21 und das Griffstück 14c' in Richtung des Pfeiles 22 verschoben. Damit werden die Schieber 14 und 14' aufeinander zu bewegt, wobei die Stifte 20 bzw. 20' an den Vorsprüngen 19 bzw.19' das Rädchen 17 gegen den Uhrzeigersinn um die Achse 18 verdrehen. Wie bereits anhand der Figur 1 beschrieben, springen die Zapfen 7 und 7' aufgrund der Federwirkung des Deckels 2 aus dem Schieberbereich heraus und die Kassette ist geöffnet. Mit dem Loslassen der Griffstücke 14c bzw. 14c' kehren die Schieber in die dargestellte Lage aufgrund der Federkräfte 15 bzw. 15' zurück. Beim Verschliessen der Kassette drücken ebenfalls wie bei Figur 1 die Zapfen 7 bzw. 7' auf die Schrägflächen 14b bzw. 14b' und bewegen damit die Schieber 14 und 14' wieder in den Richtungen 21 und 22 aufeinander zu. Nachdem die Zapfen unter die Haken 14a und 14a' zu liegen gekommen sind, kehren die Schieber 14 und 14' wieder in die dargestellte Stellung zurück.

Durch die hebelartige Verbindung der Schieber 14 und 14' ist es auch möglich, die Kassette durch ein Betätigen von nur einem Schieber zu öffnen, nachdem dieser dann über das Hebelelement 17 den anderen Schieber ebenfalls in die Öffnungsposition zieht. Dies ist insbesondere von Vorteil, wenn die Kassette in einer Be- und Entladeeinrichtung über einen Stift 5 geöffnet werden soll, damit ein zweiter Öffnungsmechanismus entfallen kann.

Erfährt nun die Kassette einen kurzen, harten Stoss, wie er beispielsweise beim Fallenlassen der Kassette auf den Fussboden entstehen kann, wird ein Öffnen der Kassette auch an einer Seite dadurch vermieden, dass bei jeder Krafteinwirkung, die für beide Schieber in gleicher Richtung erfolgt, sich ein Gleichgewicht zwischen den beiden Schiebern 14 und 14' einstellt, so dass diese unbewegt bleiben. Fällt die Kassette beispielsweise auf die rechte Seite, so wirkt auf beide Schieber eine Kraft in Richtung des Pfeiles 22. Der Schieber 14' würde in seine Öffnungsposition verschoben werden, wird aber durch die Gegenkraft des Schiebers 14, der ebenfalls eine Kraftkomponente in Richtung 22 aufweist, über die Hebelwirkung daran gehindert.

## Ansprüche

1. Einrichtung an einer Planfilmkassette, insbesondere einer Röntgenfilmkassette, zum Öffnen und Schliessen der einen Bodenteil und einen Deckel aufweisenden Kassette, mit zwei an einer Seite angeordneten, gegenläufig zu betätigenden, mittels Federn in Verschlussstellung gehaltenen Schiebern mit Haken, welche an dem Deckel angebrachte Zapfen in Verschlussstellung hintergreifen, dadurch gekennzeichnet, dass die Schieber (14,14') etwa gleiche Masse haben und jeder mit jeweils einem der beiden Enden eines zweiarmigen Hebels (17) verbunden ist, wobei der Hebel (17) die Bewegung eines Schiebers (14) in eine Richtung (21) in eine in entgegengesetzter Richtung (22) verlaufende Bewegung des anderen Schiebers (14') umsetzt.

2. Einrichtung nach Anspruch 1, dadurch gekennzeichnet, dass der Hebel (17) ein um eine an einer Seitenwand (1a) des Bodenteils (1) gelagerte Achse (18) drehbar angeordnetes Rädchen ist, in welchem zwei sich gegenüberliegende Radialschlitze (23, 23') ausgeformt sind, und dass an den sich gegenüberstehenden Schieberenden (19, 19') parallel zu der Achse (18) jeweils ein in einem der Schlitze (23 bzw. 23') geführter Stift (20, 20') angebracht ist.

3. Einrichtung nach Anspruch 1, dadurch gekennzeichnet, dass der Hebel (17) um eine an der Seitenwand (1a) des Bodenteils (1) gelagerte Achse (18) drehbar ist und dass an seine beiden Enden die sich gegenüber stehenden Enden (19,19') der Schieber (14, 14') angelenkt sind.

4. Einrichtung nach einem der Ansprüche 1 bis 3, dadurch gekennzeichnet, dass mindestens ein Schieber (14,14') hinter einer Öffnung (6) im Seitenrand des Bodenteils (1) angeordnet ist, durch welche ein Betätigungsstift (5) eines Öffnungsmechanismus eingreifen kann.

**Revendications**

1. Dispositif pour une cassette à pellicule plane, notamment pour une cassette à pellicule radiographique, destiné à l'ouverture et à la fermeture d'une cassette ayant une pièce formant fond et un couvercle, comprenant deux coulisseaux, qui sont disposés sur l'un des côtés, dont la manœuvre s'effectue en sens opposé, qui sont maintenus en la position de fermeture par des ressorts et qui ont des crochets s'accrochant, en la position de fermeture, sur des tenons du couvercle, caractérisé en ce que les coulisseaux (14, 14') ont sensiblement la même masse et chacun d'entre eux est relié à l'une des deux extrémités d'un levier (17) à deux bras qui transforme le déplacement d'un coulisseau (14) dans un sens en un déplacement de l'autre coulisseau (14') en sens opposé.

2. Dispositif selon la revendication 1, caractérisé en ce que le levier (17) est une petite roue, qui peut tourner autour d'un axe (18) monté sur une paroi (1a) latérale de la pièce (1) formant fond et dans laquelle sont formées deux encoches (23, 23') radiales opposées et aux extrémités (19, 19') qui se font face des coulisseaux sont montés parallèlement à l'axe (18) respectivement des barrettes (20, 20') engagées dans les encoches (23, 23').

3. Dispositif selon la revendication 1, caractérisé en ce que le levier (17) peut tourner autour d'un axe (18) monté sur une paroi (1a) latérale de la pièce (1) formant fond et les extrémités (19, 19') qui se font face des coulisseaux (14,14') s'articulent aux deux extrémités du levier (17).

4. Dispositif selon l'une des revendications 1 à 3, caractérisé en ce que l'un au moins des coulisseaux (14, 14') est disposé dans la paroi latérale de la pièce (1) formant fond derrière une ouverture (6) par laquelle une barrette (5) de manœuvre d'un mécanisme d'ouverture peut entrer en action.

**Claims**

1. A device applicable to a flat-film cassette, particularly to an X-ray-film cassette, for opening and closing the cassette which comprises a bottom part and a lid with two oppositely displaceable sliders arranged on one side which are retained in a locking position by means of springs the sliders having hooks which in the locking position engage behind studs mounted on the cassette lid, characterised in that the sliders (14, 14') have approximately the same mass and each is connected to one of the two ends of a two-armed lever (17), said lever (17) converting the movement of one slider (14) in one direction (21) into an oppositely directed movement (22) of the other slider (14').

2. A device according to claim 1, characterised in that the lever (17) is a small wheel which is rotatable about an axis (18) and in which two mutually opposed radial slots (23, 23') are provided mounted in a lateral wall (1a) of the cassette bottom part (1) and in that on each of the mutually opposed slider ends (19, 19') a pin (20, 20') is fitted which extends parallel to the axis (18) and which is guided respectively in one of the slots (23,23').

3. A device according to claim 1, characterised in that the lever (17) is rotatable about an axis (18) mounted in a lateral wall (1a) of the cassette bottom (1) and in that the mutually opposed ends (19, 19') of the sliders (14, 14') are hinged to the two lever ends.

4. A device according to any one of claims 1 to 3, characterised in that at least one slider (14,14') is arranged behind an aperture (6) in the lateral edge of the cassette bottom (1), through which aperture an actuating pin (5) of an opening mechanism can engage.

Fig. 1

Fig. 3

Fig. 2